# EUROPÄISCHE PATENTSCHRIFT

(11) **EP 3 195 982 B1**
(45) Veröffentlichungstag und Bekanntmachung des Hinweises auf die Patenterteilung: **04.11.2020**
(21) Anmeldenummer: 16188981.1
(22) Anmeldetag: 15.09.2016
(51) Int. Cl.: B25B 29/02, B23P 19/06

(54) **SPANNVORRICHTUNG FÜR EINE SCHRAUBVERBINDUNG, VERFAHREN ZUM ANZIEHEN EINER SCHRAUBVERBINDUNG SOWIE GEWINDEMUTTER**
CLAMPING DEVICE FOR A SCREWED CONNECTION, METHOD FOR TIGHTENING A SCREW CONNECTION, AND NUT
DISPOSITIF DE SERRAGE POUR UNE LIAISON VISSEE, PROCEDE DE SERRAGE D'UNE LIAISON VISSEE ET ECROU FILETE

(30) Priorität: 29.09.2015 DE 102015116484
(43) Veröffentlichungstag der Anmeldung: 26.07.2017
(73) Patentinhaber: Hohmann, Jörg, 59872 Meschede (DE); Hohmann, Frank, 59581 Warstein (DE)
(72) Erfinder:
(74) Vertreter: Christophersen Patentanwälte

(56) Entgegenhaltungen:
- EP-A1- 2 883 653
- DE-U1- 9 321 492

## Beschreibung

Die Erfindung betrifft eine Spannvorrichtung zum Dehnen einer aus einem Gewindebolzen und einer gegen eine feste Unterlage abgestützten Gewindemutter bestehenden Schraubverbindung durch Zug an dem freien Gewindeendabschnitt des Gewindebolzens mit einem Zylindergehäuse mit mindestens einem darin in Längsrichtung des Gewindebolzens bewegbaren und gemeinsam mit einer Innenwandung des Zylindergehäuses einen hydraulischen Arbeitsraum begrenzenden Kolben sowie mit einer durch den Kolben in Kolbenlängsrichtung mitnehmbar ausgebildeten Wechselbuchse, welche zum Verschrauben mit dem Gewindebolzen mit einem Gewinde versehen ist, und mit einem in Verlängerung zu dem Zylindergehäuse angeordneten Stützrohr, welches die Gewindemutter umgibt und zur Abstützung gegen die Unterlage ausgebildet ist, wobei das Stützrohr mit einem Riegel versehen ist, der zur Anlage an einer dem Kolben abgewandten Sperrfläche der Gewindemutter mit einer dem Kolben zugewandten Riegelfläche versehen ist.

Aus der WO 2010/054959 A1 ist eine Bolzenspannvorrichtung bekannt, bei der, um den Gewindebolzen der Verschraubung in Bolzenlängsrichtung zu dehnen, in einem Zylindergehäuse der Spannvorrichtung eine Wechselbuchse angeordnet ist, die mit einem Gewinde zum Verschrauben mit dem Gewindebolzen versehen ist. Die Wechselbuchse lässt sich durch einen hydraulischen Mechanismus unter Zug setzen, um so den Gewindebolzen zu dehnen. Zum Aufschrauben der Wechselbuchse auf den Gewindebolzen wird die Spannvorrichtung von oben her auf den Gewindebolzen aufgesetzt und um ihre Achse gedreht, wodurch die Wechselbuchse auf den Gewindeendabschnitt des Gewindebolzens aufgeschraubt wird. Ein solches Aufschrauben unter Drehen der Spannvorrichtung um deren Achse ist zeitaufwendig und angesichts des Gewichts derartiger Schraubenspannvorrichtungen auch mühsam. Allerdings ist das Aufsetzen der Bolzenspannvorrichtung von oben her auf die Verschraubung noch der Idealfall. Häufig aber steht der Monteur vor einer Situation, in der Schraubbolzen von unten her nachgespannt werden müssen, also in einer Über-Kopf-Situation. Die Handhabung einer Bolzenspannvorrichtung, wie sie in der WO 2010/054959 A1 beschrieben ist, ist hier mit beträchtlichen Problemen verbunden, da das Aufschrauben nach oben hin einschließlich des erheblichen Gewichts der Bolzenspannvorrichtung erfolgen muss.

Eine ähnliche Spannvorrichtung, ist u. a. aus der DE 93 21 492 U1 bekannt. Bei dieser Spannvorrichtung, welche die Merkmale des Oberbegriffs von Anspruch 1 offenbart, setzt sich das Zylindergehäuse in Richtung der Gewindemutter fort, umgibt diese und stützt sich gegen eine Unterlage ab, wobei das Stützrohr mit einem Riegel versehen ist, der zur Anlage an einer dem Kolben abgewandten Sperrfläche der Gewindemutter mit einer dem Kolben zugewandten Riegelfläche versehen ist.

Der Erfindung liegt die **Aufgabe** zugrunde, eine für das Nachziehen einer Schraubverbindung besonders geeignete Vorrichtung zu schaffen, welche sich auch für den Einsatz in anderen Ausrichtungen und sogar bei Verschraubungsarbeiten über Kopf eignet.

Zur Lösung dieser Aufgabe wird bei einer eingangs genannten Spannvorrichtung vorgeschlagen, dass das Stützrohr ein gegenüber dem Zylindergehäuse eigenständiges und von diesem trennbares Bauteil ist, und dass das Stützrohr und das Zylindergehäuse durch mindestens ein Verbindungselement in Kolbenlängsrichtung verbindbar sind.

Vorzugsweise ist, zur Erzielung einer einfachen Bauart des Riegels, dieser in der Weise beweglich an dem Stützrohr geführt, dass er eine Bewegung quer zur Kolbenlängsrichtung durchführt.

Durch den Riegel besteht die Möglichkeit, bei der Vorbereitung des eigentlichen Spannprozesses das Stützrohr gegenüber der Schraubverbindung in Längsrichtung zu verriegeln. Es kommt dabei zu einem Eingreifen des Riegels in die Gewindemutter der zu dehnenden Schraubverbindung. Der Riegel ist hierzu mit einer zu dem Kolben hin gerichteten Riegelfläche versehen. Die Gewindemutter ist von spezieller Bauart, indem sie mit einer dem Kolben der Spannvorrichtung abgewandten Sperrfläche versehen ist, in die der Riegel eingreifen kann. Im Ergebnis kommt es in der Verriegelungsstellung zu einem Hintergreifen der Gewindemutter durch die Riegelfläche des Riegels. Die Gewindemutter trägt daher, während der Vorbereitung des Spannprozesses, das Gewicht der Spannvorrichtung.

Indem der Riegel an dem Stützrohr der Spannvorrichtung angeordnet ist, lässt sich das Stützrohr und damit mittelbar auch die Spannvorrichtung an der Gewindemutter ankoppeln. Dies erfolgt durch einen Formschluss zwischen Riegel und Gewindemutter. Alle weiteren Arbeiten im Rahmen der Vorbereitung des Spannprozesses lassen sich sodann durchführen, ohne dass der Bediener die erhebliche Gewichtslast der Spannvorrichtung halten bzw. stemmen muss oder sogar die ganze Vorrichtung nach Art einer Schraubbewegung drehen muss. Vor allem bei Über-Kopf-Arbeiten, aber auch bei Arbeiten mit z. B. horizontaler Verschraubungsachse, wird die Handhabung der Schraubenspannvorrichtung wesentlich erleichtert, und für den Bediener auch sicherer.

Mit einer Ausgestaltung wird vorgeschlagen, dass zur Führung des Riegels Führungsflächen einerseits an dem Riegel und andererseits an dem Stützrohr ausgebildet sind, wobei sich diese Führungsflächen tangential in Bezug auf die Kolbenlängsachse erstrecken. Zum Beispiel kann ein erstes sich tangential erstreckendes Führungsflächenpaar auf der einen, und ein zweites sich tangential erstreckendes Führungsflächenpaar auf der anderen Seite der Kolbenlängsachse angeordnet sein. Auf diese Weise wird eine relativ gleichmäßige Verteilung der Gewichtskräfte in Bezug auf den Umfang der Gewindemutter erreicht.

Der Riegel ist vorzugsweise als ein Schieber aus zwei zueinander parallelen Längsabschnitten ausgebildet, an denen jeweils die Führungsflächen und Riegelflächen ausgebildet sind. In diesem Fall befinden sich die Riegelflächen an den einander gegenüberliegenden Innenrändern der beiden Längsabschnitte des Riegels.

Gemäß einer weiteren Ausgestaltung sind an jedem Längsabschnitt hintereinander ein vorzugsweise als Kreissegment gestalteter Freigabeabschnitt und ein Riegelabschnitt angeordnet, wobei sich an dem Riegelabschnitt die Riegelfläche befindet.

Gemäß einer weiteren Ausgestaltung sind die beiden Längsabschnitte zumindest an ihren einen Enden durch einen Quersteg fest miteinander verbunden. Der Quersteg erleichtert die Handhabung des Riegels, zudem kann seine Position als Indikator dienen, ob der Riegel sich in seiner Riegelstellung oder in seiner Freigabestellung befindet.

Eine weitere Ausgestaltung ist gekennzeichnet durch ein einerseits gegenüber dem Stützrohr und andererseits gegenüber dem Riegel abgestütztes Federelement, welches den Riegel in Richtung Verriegelung beaufschlagt. Das Federelement ist ein Sicherheitsbeitrag, da eine einmal herbeigeführte Verriegelung sich nicht wieder selbsttätig entsperren kann. Vielmehr ist es zum Lösen bzw. Entsperren notwendig, den Riegel entgegen der Federkraft und damit bewusst zu entsperren.

Vorzugsweise ist das Stützrohr ein gegenüber dem Zylindergehäuse eigenständiges und von diesem trennbares Bauteil, und das Stützrohr und das Zylindergehäuse sind durch mindestens ein Verbindungselement in Kolbenlängsrichtung verbindbar. Bei dieser Bauart lässt sich daher zunächst nur das Stützrohr an der Gewindemutter verriegeln. Erst in einem weiteren Schritt folgt, an dem insoweit bereits sicher fixierten Stützrohr, die Befestigung des deutlich schwereren Zylindergehäuses, bevor anschließend die Wechselbuchse in das Zylindergehäuse eingesetzt und auf das freie Gewindeende des Gewindebolzens aufgeschraubt wird. Für dieses Verschrauben muss der Bediener nur das relativ geringe Gewicht der Wechselbuchse heben bzw. zugleich in eine Drehbewegung um die Kolbenlängsachse umsetzen.

Weitere Einzelheiten und Vorteile ergeben sich aus der nachfolgenden Beschreibung eines auf der Zeichnung dargestellten Ausführungsbeispiels. Es zeigen:
- Fig. 1: einen Längsschnitt durch eine Schraubverbindung aus einem Gewindebolzen und einer Gewindemutter, wobei schematisch eine Wechselbuchse und ein Riegel einer Gewindebolzen-Spannvorrichtung ergänzt sind;
- Fig. 2: einen Längsschnitt durch die Gewindebolzen-Spannvorrichtung, angesetzt in Fluchtung zu dem Gewindebolzen und vorläufig gesichert durch Hintergreifen der Gewindemutter der Verschraubung;
- Fig. 3: einen Querschnitt entsprechend der in Fig. 2 eingetragenen Schnittebene III-III;

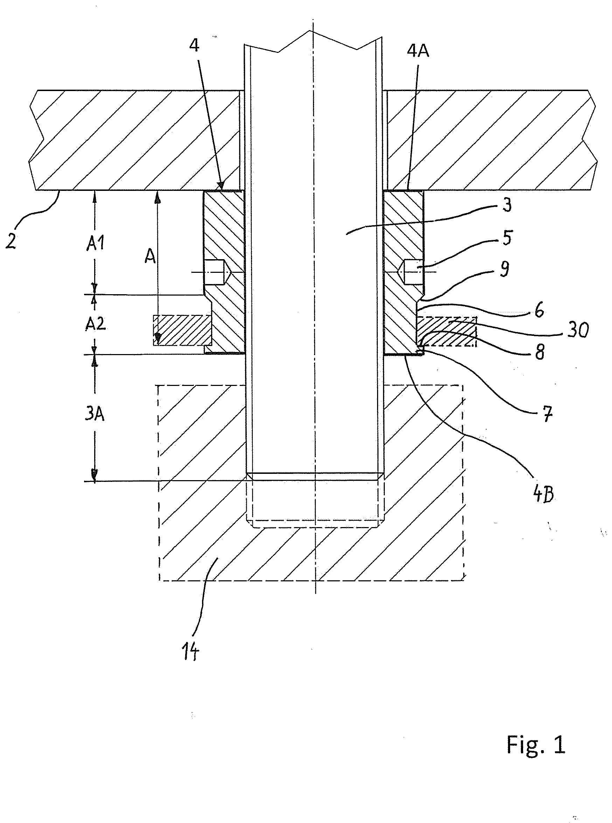

Fig. 1 zeigt in einem Längsschnitt eine für hohe Zugbelastungen ausgelegte Schraubverbindung. Diese setzt sich zusammen aus einem durch das zu verschraubende Bauteil hindurchgeführten und auf einer Teillänge aus dem Bauteil herausgeführten Gewindebolzen 3, sowie einer Gewindemutter 4 auf dem herausgeführten Gewindeabschnitt des Gewindebolzens. Durch die in dem Gewindebolzen 3 wirkenden Zugkräfte stützt sich die Gewindemutter 4 mit ihrer ihr Innengewinde ringförmig umgebenden Aufstandsfläche 4A gegen das Bauteil ab. Die Außenseite des Bauteils im Bereich der Abstützung der Gewindemutter 4 wird im Folgenden als Unterlage 2 bezeichnet.

Die Länge des Gewindebolzens 3 ist so gewählt, dass ein Gewindeendabschnitt 3A noch über die Außenseite 4B der Gewindemutter 4 frei übersteht. Die Länge dieses freien Gewindeendabschnitts 3A sollte mindestens gleich dem Bolzendurchmesser des Gewindebolzens sein. Auf diese Weise steht genügend Gewindetraglänge für die Verbindung mit einer Wechselbuchse 14 zur Verfügung. Die Wechselbuchse 14 ist Bestandteil einer im Folgenden näher beschriebenen Spannvorrichtung, mit der sich der Gewindebolzen 3 längen bzw. in Längsrichtung strecken lässt, um anschließend die Gewindemutter 4 ohne großen Kraftaufwand nachziehen zu können.

Die Gewindemutter 4 weist auf ihrem Außenumfang zwei Längsabschnitte A1, A2 unterschiedlicher Funktion auf.

Auf dem der Aufstandsfläche 4A näheren Längsabschnitt A1, welcher zylindrisch gestaltet ist, ist die Gewindemutter 4 mit Strukturen 5 für den Eingriff eines von radial außen her ansetzbaren Werkzeugs versehen. Die Eingriffsstrukturen 5 sind hier gleichmäßig, d. h. in gleichen Winkelabständen, über den Umfang der Gewindemutter verteilt angeordnete Sacklöcher, in die zum Drehen der Gewindemutter jeweils ein stiftförmiges Werkzeug radial eingeführt werden kann.

Auf dem von der Aufstandsfläche 4A weiter entfernten Längsabschnitt A2 ist die Gewindemutter 4 mit einer umlaufenden Ringnut 6 versehen. Die zu der Aufstandsfläche 4A nähere Nutwandung 9 der Ringnut 6 weist vorzugsweise die Form eines Konus bzw. Kegelstumpfs auf.

Die zu der Aufstandsfläche 4A entferntere Nutwandung der Ringnut 6 ist vorzugsweise parallel zu der Aufstandsfläche 4A angeordnet. Sie hat die Gestalt einer Ringfläche und dient im Rahmen des nachfolgend näher beschriebenen Spannprozesses als Sperrfläche 8, gegen die sich ein Riegel 30 der bei dem Spannprozess verwendeten Spannvorrichtung abzustützen vermag. Die Sperrfläche 8 ist, wegen der unterschiedlichen Funktion, außerhalb jenes Längsabschnitts A1 angeordnet, auf dem die Gewindemutter 4 mit den Eingriffsstrukturen 5 versehen ist.

Für eine ausreichende Festigkeit der ringförmigen Sperrfläche 8 befindet sich diese an einem Radialbund 7. Der Radialbund 7 erstreckt sich kreisförmig über den gesamten Umfang der Gewindemutter 4. Vorzugsweise ist der Durchmesser des Radialbunds 7 nicht größer, als der übrige maximale Durchmesser der Gewindemutter. Da die Ringnut 6 und der Radialbund 7 jeweils kreisrund sind, hat die Sperrfläche 8 die Gestalt einer flachen oder gegebenenfalls leicht konischen Ringfläche mit kreisrundem Innenrand und kreisrundem Außenrand. Dies hat den Vorteil eines Maximums an Fläche für den Hintergriff, außerdem ist die Größe der Sperrfläche 8 dadurch unabhängig von der jeweiligen Drehlage der Mutter.

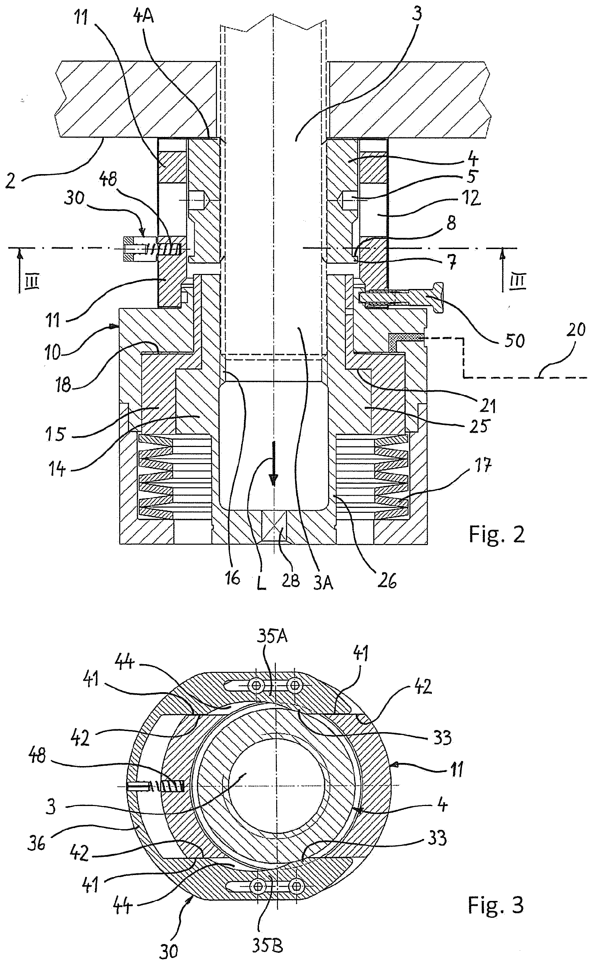

Die in den Figuren 2 und 3 wiedergegebene, hydraulisch zu betreibende Spannvorrichtung dient dem Anziehen, vor allem Nachziehen, und ggf. auch dem Lösen der in Fig. 1 wiedergegebenen Schraubverbindung. Mit der Spannvorrichtung lässt sich in Bolzenlängsrichtung für eine gewissene Zeit eine vorgegebene Vorspannkraft auf den Gewindebolzen 3 aufbringen, wodurch sich dieser etwas streckt, um so währenddessen die auf den Gewindebolzen 4 aufgeschraubte Gewindemutter 4 der Schraubverbindung anzuziehen bzw. nachzuziehen.

Eine zentral in der Spannvorrichtung angeordnete Wechselbuchse 14 ist an ihrem einen Ende mit einem Gewinde 16 in der Ausgestaltung als Innengewinde versehen. Mit diesem Gewinde 16 wird die Wechselbuchse 14 vor Beginn des Spannprozesses auf den über die Gewindemutter 4 hinaus vorstehenden Gewindeendabschnitt 3A des Gewindebolzens 3 aufgeschraubt. Anschließend wird die so mit dem Gewindebolzen 3 verschraubte Wechselbuchse 14 hydraulisch unter Zug gesetzt, wodurch sich die Verschraubung in Längsrichtung L dehnt. Die Aufstandsfläche 4A der Gewindemutter 4 kommt dadurch frei, so dass sich die Gewindemutter 4 nahezu widerstandsfrei drehen und auf diese Weise erneut gegen ihre feste Unterlage 2 anziehen lässt.

Umschlossen ist der hydraulische Spannmechanismus von einem druckfesten Zylindergehäuse 10. Dieses kann sich modulartig aus mehreren Zylinderabschnitten zusammensetzen. Als starre Fortsetzung des Zylindergehäuses 10 ist an das Zylindergehäuse ein Stützrohr 11 angesetzt. Das Stützrohr 11 ist hier ein gegenüber dem Zylindergehäuse 10 separates, insbesondere von dem Zylindergehäuse 1 trennbares Bauteil.

Das Stützrohr 11 ist zu dem Gewindebolzen 3 hin offen, umgibt die Gewindemutter 4, und stützt sich gegen die Unterlage 2 ab. Die Unterlage 2 bildet daher beim Spannprozess das Widerlager. Bei der in Fig. 1 wiedergegebenen Anwendung ist die Unterlage 2, gegen die die Gewindemutter 4 und das Stützrohr 11 abgestützt ist, die nach unten gerichtete Fläche eines Maschinen- oder Anlagenteils. Der Spannprozess erfolgt hier also durch einen nach unten gerichteten Zug an dem Gewindebolzen 3, wobei zum Nachziehen der Gewindemutter 4 diese nach oben geschraubt wird, bis sie mit ihrer Aufstandsfläche 4A wieder fest gegen die Unterlage 2 anliegt.

Das Stützrohr 11 ist mit mindestens einer Öffnung 12 versehen. Die Öffnung 12 ist von solcher Größe, dass sich durch diese Öffnung hindurch die Gewindemutter 4 drehen und damit nachziehen lässt. Dieses Drehen ist natürlich nur möglich, wenn die Spannvorrichtung arbeitet, und daher die Gewindemutter 4 nicht durch erhebliche Reibung belastet ist. Das Drehen der Gewindemutter 4 kann auch durch ein kleines Getriebe erfolgen, welches seitlich an dem Stützrohr 11 angebracht ist und durch die Öffnung 12 hindurch arbeitet.

Seitlich an dem Zylindergehäuse 10 befindet sich ein Hydraulikanschluss, über den der hydraulische Arbeitsraum 18 der Spannvorrichtung ventilgesteuert mit einer externen Hydraulikversorgung verbunden ist.

Das Zylindergehäuse 10 umfasst einen oder alternativ auch mehrere Hydraulikzylinder, die über den Hydraulikanschluss und eine flexible, druckfeste Hydraulikleitung 20 mit der externen Hydraulikversorgung verbunden sind, um einen Kolben 15 mit Hydraulikdruck zu beaufschlagen. In jedem Hydraulikzylinder ist, zu der Zylinderinnenwand hin abgedichtet, ein Kolben 15 in Längsrichtung beweglich angeordnet. Bei dem hier beschriebenen Ausführungsbeispiel ist nur eine Zylinderstufe und daher auch nur ein Kolben 15 vorhanden.

Durch den Aufbau von Hydraulikkraft in dem hydraulischen Arbeitsraum 18 des Zylinders wird der Kolben 15 nach unten gedrückt. Dies erfolgt entgegen der Kraft einer den Kolben 15 von unten beaufschlagenden, starken Feder 17. Die Feder 17 dient als Kolbenrückstellfeder und beaufschlagt den Kolben 15 unmittelbar mit einer Kraft die bestrebt ist, den Kolben 15 in seiner in Fig. 2 wiedergegebenen Grundstellung zu halten, in der der hydraulische Arbeitsraum 18 sein Minimum hat.

Der Kolben 15 umgibt ringförmig die Wechselbuchse 14. Er ist an seinem Innenrand mit einer umlaufenden Stufe versehen, die, der Unterlage 2 abgewandt, eine Mitnehmerfläche 21 bildet, an der sich die Wechselbuchse 14 mit einem radial erweiterten Abschnitt 25 abstützt. Auf diese Weise ist die Wechselbuchse 14 durch den Kolben 15 axial mitnehmbar.

Die Wechselbuchse 14 setzt sich zusammen aus einem Abschnitt, welcher das Innengewinde 16 umschließt, dem radial erweiterten Abschnitt 25 und einem Endstück 26. Die Wechselbuchse 14 befindet sich zentral auf der Längsachse der Spannvorrichtung und ist an ihrem bolzenseitigen Ende mit dem Innengewinde 16 zum Aufschrauben auf den Gewindebolzen 3 versehen.

Das Endstück 26 befindet sich an dem anderen, also dem Gewinde 16 abgewandten Ende der Wechselbuchse. Das Endstück 26 ist so schlank, dass es gut von Hand greifbar ist, um so die Wechselbuchse 14, zur Vorbereitung des eigentlichen Spannprozesses, auf den Gewindeendabschnitt 3A des Gewindebolzens aufzuschrauben. Um dieses Aufschrauben maschinell zu erledigen, ist in dem Endstück 26 eine Schlüsselfläche 28 ausgebildet, an die sich ein handelsübliches Werkzeug ansetzen lässt, um so einerseits die Wechselbuchse 14 gegenüber dem Zylindergehäuse 1 zu drehen, und andererseits die Wechselbuchse 14 in Längsrichtung zu dem Gewindebolzen 3 hin zu bewegen und mit diesem zu verschrauben. Die Wechselbuchse 14 ist gegenüber dem Kolben 15 frei drehbar ausgebildet. Ihr Durchmesser ist so gering, dass sie sich in das Zylindergehäuse 10 einsetzen lässt, ohne vorher die Feder 17 entfernen zu müssen.

Die Gewindemutter 4 ist mit der durch einen Riegel 30 hintergreifbaren, in Richtung zu der Aufstandsfläche 4A weisenden Sperrfläche 8 versehen. Der Riegel 30 ist zur Anlage an der Sperrfläche 8 mit einer dem Kolben 15 zugewandten Riegelfläche 33 versehen (Fig. 3). Indem die Riegelfläche 33 des Riegels 30 die an der Gewindemutter 4 ausgebildete Sperrfläche 8 hintergreift, ist in der Situation gemäß Fig. 2 und Fig. 3 der Riegel 30, der seinerseits an dem Stützrohr 11 angeordnet ist, in Längsrichtung L an der Gewindemutter 4 verriegelt. Das Stützrohr 11 "hängt" daher bei Arbeiten über Kopf an der speziell ausgestalteten Gewindemutter 4.

Gemäß Fig. 2 ist der hufeisenförmig gestaltete Riegel 30 quer zu der Längsrichtung des Stützrohrs 11 an diesem beweglich geführt. Für die Führung des Riegels 30 sind Führungsflächen 41 an dem Stützrohr 11 und Führungsflächen 42 an dem Riegel 30 ausgebildet wobei sich diese Führungsflächenpaare 41, 42 tangential in Bezug auf die Kolbenlängsachse L der Spannvorrichtung erstrecken. Indem der Riegel 30 insgesamt hufeisenförmig gestaltet ist, befindet sich ein erstes sich tangential zu der Kolbenlängsachse L erstreckendes Führungsflächenpaar 41, 42 auf der einen, und ein zweites Führungsflächenpaar 41, 42 auf der anderen Seite der Kolbenlängsachse L.

Der Riegel 30 hat insgesamt die Gestalt eines hufeisenförmig gestalteten Schiebers aus zwei parallel zueinander angeordneten Längsabschnitten 35A, 35B, an denen auch die Führungsflächen 42 und die Riegelflächen 33 ausgebildet sind, und einem die zwei Längsabschnitte 35A, 35B starr miteinander verbindenden Quersteg 36. Das Sperren und Freigeben des Riegels 30 erfolgt, indem dieser quer zu dem Stützrohr 11 bewegt wird, wobei die an dem Riegel 30 ausgebildeten Führungsflächen 42 durch die an dem Stützrohr 11 ausgebildeten Führungsflächen 41 geradlinig geführt werden.

Zur Realisierung der Sperrstellung einerseits und der Freigabestellung andererseits ist an jedem Längsabschnitt 35A, 35B des Riegels 30 aufeinanderfolgend ein als Kreissegment gestalteter Freigabeabschnitt 44 sowie ein Riegelabschnitt ausgebildet, an dem sich die eigentliche Riegelfläche 33 befindet.

In Fig. 3 ist wiedergegeben, wie in der Sperrstellung des Riegels der Riegelabschnitt und damit die Riegelfläche 33 zur Anlage gegen die an dem Radialbund 7 der Mutter ausgebildete Sperrfläche 8 gelangt, so dass das Stützrohr 11 in Kolbenlängsrichtung L formschlüssig an der Gewindemutter 4 verriegelt ist. Damit diese Längsverriegelung nahezu spielfrei ist, sollte an der Gewindemutter 4 der in Längsrichtung L gemessene Abstand A zwischen der Sperrfläche 8 und der Aufstandsfläche 4A in etwa gleich sein dem Abstand, den die Riegelfläche 33 zu der gegen die Unterlage 2 anliegenden Stirnfläche des Stützrohrs 11 aufweist.

Wird hingegen der Riegel aus der in Fig. 3 wiedergegebenen Sperrstellung nach rechts in seine Entsperrstellung bewegt, gelangt der Radialbund 7 der Mutter zwischen die beiden kreissegmentförmig gestalteten Freigabeabschnitte 44, wodurch der Hintergriff der Gewindemutter 4 aufgehoben ist. Dieses Entsperren des Riegels ist nur entgegen der entgegenwirkenden Kraft eines Federelements 48 möglich, welches den Riegel 30 in Richtung Verriegelung beaufschlagt und einerseits gegenüber dem Stützrohr 11 und andererseits gegenüber dem Riegel 30 abgestützt ist. Gemäß Fig. 3 ist das Federelement 48 im Bereich des Querstegs 36 angeordnet.

Das Zylindergehäuse 10 der Spannvorrichtung ist mit dem Stützrohr 11 über mehrere Verbindungselemente 50 verbindbar. Bei dem hier beschriebenen Ausführungsbeispiel dienen drei über den Umfang der Spannvorrichtung angeordnete Bolzen 50 als Verbindungselemente.

Gemäß Fig. 2 ist jeder Bolzen 50 in einer Bohrung in dem Stützrohr 11 geführt, und federbelastet in ein Sackloch in dem Zylindergehäuse 10 einrastbar. Umgekehrt ist es auch möglich, die Bolzen 50 an dem Zylindergehäuse 10 zu führen und in entsprechende Sacklöcher in dem Stützrohr 11 einrasten zu lassen, um so zu einer starren Verbindung des Zylindergehäuses 10 mit dem Stützrohr 11 zu kommen.

Für einen Spannprozess, bei dem sich die Gewindemutter 4 der Verschraubung von unten her gegen eine Unterlage 2, z. B. ein Maschinenteil oder ein Maschinengerüst, abstützt, wird wie folgt vorgegangen:
Zunächst wird nur das Stützrohr 11, also getrennt von dem Zylindergehäuse 10, von unten her über die Gewindemutter 4 gestülpt. Dabei ist der Riegel 30 entgegen der Kraft des Federelements 48 zurückgezogen, d. h. die kreissegmentförmigen Freigabeabschnitte 44 des Riegels 30 geben den Umfang der Gewindemutter frei.

Sobald das Stützrohr 11 gegen die Unterlage 2 angelegt ist, wird der Riegel 30 freigegeben bzw. losgelassen. Unter der Kraft des Federelements 48 gleitet der Riegel 30 von selbst in seine Verriegelungsstellung, indem die Riegelabschnitte mit den daran ausgebildeten Riegelflächen 33 hinter die an der Mutter ausgebildete Sperrfläche 8 gelangen. Hierdurch wird das Stützrohr 11 an der Gewindemutter 4 längsverriegelt, also in Längsrichtung L fixiert. Die Längsverriegelung ist, vor allem durch die Materialdicke des Radialbundes 7 der Mutter, dafür ausgelegt, den Zugbelastungen aufgrund der Gewichtskraft des Spannzylinders sicher standzuhalten.

In einem weiteren Schritt wird sodann das Zylindergehäuse 10 an dem Stützrohr 11 befestigt, was über die bereits beschriebenen Bolzenverbindungen mit den Bolzen 50 erfolgen kann.

Bis zu diesem Zeitpunkt ist die Wechselbuchse 14 noch nicht in das Zylindergehäuse 10 eingesetzt. Vielmehr wird erst in einem weiteren Schritt die Wechselbuchse 14 aufgeschraubt. Hierzu wird die Wechselbuchse 14 zunächst von unten her soweit in das Zylindergehäuse 10 eingesetzt, bis es zu einem Kontakt der Wechselbuchse 14 mit dem freien Ende des Gewindebolzens 3 kommt. Sodann wird die Wechselbuchse 14 auf den Gewindeendabschnitt 3A des Gewindebolzens 3 von Hand oder mittels eines an die Schlüsselfläche 28 angesetzten Werkzeugs aufgeschraubt. Bei diesem Aufschrauben muss der Bediener nur die geringe Gewichtskraft der Wechselbuchse 14 tragen, da das Zylindergehäuse 10 selbst mittels des Stützrohrs 11 an der Gewindemutter 4 fixiert ist, und daher nicht mehr angehoben oder gedreht werden muss.

Ist die Wechselbuchse 14 vollständig auf den Gewindeendabschnitt 3A des Gewindebolzens 3 aufgeschraubt, kann anschließend der hydraulische Spannprozess begonnen werden. Ist der Hydraulikdruck auf den Kolben aufgebaut, sind die Sperrflächen 8 und Riegelflächen 33 nicht belastet, da die Spannkraft des sich dehnenden bzw. streckenden Gewindebolzens 3 allein über das entsprechend stark dimensionierte Stützrohr 11 von dem Zylindergehäuse 10 auf die als Widerlager dienende Unterlage 2 abgeführt wird.

Abschließend wird der Riegel 30 von Hand und entgegen der Kraft der Feder 48 entsperrt, und dabei die Spannvorrichtung von der Verschraubung abgenommen.

### Bezugszeichenliste

- 2: Unterlage
- 3: Gewindebolzen
- 3A: Gewindeendabschnitt
- 4: Gewindemutter
- 4A: Aufstandsfläche der Mutter
- 4B: Außenseite der Mutter
- 5: Eingriffsstruktur
- 6: Ringnut
- 7: Radialbund
- 8: Sperrfläche
- 9: Nutwandung
- 10: Zylindergehäuse
- 11: Stützrohr
- 12: Öffnung
- 14: Wechselbuchse
- 15: Kolben
- 16: Gewinde
- 17: Feder
- 18: hydraulischer Arbeitsraum
- 20: Hydraulikleitung
- 21: Mitnehmerfläche
- 25: radial erweiterter Abschnitt
- 26: Endstück
- 28: Schlüsselfläche
- 30: Riegel
- 33: Riegelfläche
- 35A: Längsabschnitt
- 35B: Längsabschnitt
- 36: Quersteg
- 41: Führungsfläche
- 42: Führungsfläche
- 44: Freigabeabschnitt
- 48: Federelement
- 50: Verbindungselement, Bolzen

- A: Abstand
- A1: Längsabschnitt
- A2: Längsabschnitt
- L: Längsrichtung

## Patentansprüche

1. Spannvorrichtung zum Dehnen einer aus einem Gewindebolzen (3) und einer gegen eine feste Unterlage (2) abgestützten Gewindemutter (4) bestehenden Verschraubung durch Zug an dem freien Gewindeendabschnitt des Gewindebolzens (3), mit einem Zylindergehäuse (10) mit mindestens einem darin in Längsrichtung des Gewindebolzens bewegbaren und gemeinsam mit einer Innenwandung des Zylindergehäuses (10) einen hydraulischen Arbeitsraum (18) begrenzenden Kolben (15) sowie mit einer durch den Kolben (15) in Kolbenlängsrichtung (L) mitnehmbar ausgebildeten Wechselbuchse (14), welche zum Verschrauben mit dem Gewindebolzen (3) mit einem Gewinde (16) versehen ist, und mit einem in Verlängerung zu dem Zylindergehäuse (10) angeordneten Stützrohr (11), welches die Gewindemutter (4) umgibt und zur Abstützung gegen die Unterlage (2) ausgebildet ist, wobei das Stützrohr (11) mit einem Riegel (30) versehen ist, der zur Anlage an einer dem Kolben (15) abgewandten Sperrfläche (8) der Gewindemutter (4) mit einer dem Kolben (15) zugewandten Riegelfläche (33) versehen ist, **dadurch gekennzeichnet, dass** das Stützrohr (11) ein gegenüber dem Zylindergehäuse (10) eigenständiges und von diesem trennbares Bauteil ist, und dass das Stützrohr (11) und das Zylindergehäuse (10) durch mindestens ein Verbindungselement (50) in Kolbenlängsrichtung (L) verbindbar sind.

2. Spannvorrichtung nach Anspruch 1, **dadurch gekennzeichnet, dass** der Riegel (30) quer zu der Kolbenlängsrichtung (L) beweglich an dem Stützrohr (11) geführt ist.

3. Spannvorrichtung nach Anspruch 1 oder 2, **dadurch gekennzeichnet, dass** zur Führung des Riegels (30) Führungsflächen (42, 41) an dem Riegel (30) und an dem Stützrohr (11) ausgebildet sind, wobei sich die Führungsflächen (42, 41) tangential in Bezug auf die Kolbenlängsachse (L) erstrecken.

4. Spannvorrichtung nach Anspruch 3, **dadurch gekennzeichnet, dass** der Riegel (30) als ein Schieber aus zwei zueinander parallelen Längsabschnitten (35A, 35B) ausgebildet ist, an denen jeweils die Führungsflächen (42) und Riegelflächen (33) ausgebildet sind.

5. Spannvorrichtung nach Anspruch 4, **dadurch gekennzeichnet, dass** an jedem Längsabschnitt (35A, 35B) hintereinander ein vorzugsweise als Kreissegment gestalteter Freigabeabschnitt (44) und ein Riegelabschnitt, an dem sich die Riegelfläche (33) befindet, angeordnet sind.

6. Spannvorrichtung nach einem der Ansprüche 4 oder 5, **dadurch gekennzeichnet, dass** die beiden Längsabschnitte (35A, 35B) zumindest an ihren einen Enden durch einen Quersteg (36) miteinander verbunden sind.

7. Spannvorrichtung nach einem der vorangehenden Ansprüche, **gekennzeichnet durch** ein einerseits gegenüber dem Stützrohr (11) und andererseits gegenüber dem Riegel (30) abgestütztes Federelement (48), welches den Riegel (30) in Richtung Verriegelung beaufschlagt.

8. Spannvorrichtung nach einem der vorangehenden Ansprüche, **gekennzeichnet durch** mehrere auf unterschiedlichen Umfangsabschnitten angeordnete Bolzen (50) als Verbindungselemente.

## Claims

1. Tensioning device for expanding a screw connection, composed of a threaded bolt (3) and a threaded nut (4) that is supported on a firm base (2), by traction on the free threaded end portion of the threaded bolt (3), having a cylinder housing (10) having at least one piston (15) which in said cylinder housing (10) is movable in the longitudinal direction of the threaded bolt and conjointly with an internal wall of the cylinder housing (10) delimits a hydraulic operating space (18), as well as having an replaceable bushing (14) which in the piston longitudinal direction (L) is configured so as to be able to be entrained by the piston (15) and which for screwing to the threaded bolt (3) is provided with a thread (16), and having a support tube (11) which is disposed in an extension of the cylinder housing (10) and which surrounds the threaded nut (4) and is configured so as to be supported in relation to the base (2), wherein the support tube (11) is provided with a lock bar (30) which for bearing on a blocking face (8) of the threaded nut (4) that faces away from the piston (15) is provided with a lock bar face (33) that faces the piston (15), **characterized in that** the support tube (11) is a part which is independent from the cylinder housing (10) and is separable from the latter, and **in that** the support tube (11) and the cylinder housing (10) in the piston longitudinal direction (L) are connectable by way of at least one connecting element (50).

2. Tensioning device according to Claim 1, **characterized in that** the lock bar (30) is guided on the support tube (11) so as to be movable transversely to the piston longitudinal direction (L) .

3. Tensioning device according to Claim 1 or 2, **characterized in that** guide faces (42, 41) for guiding the lock bar (30) are configured on the lock bar (30) and on the support tube (11), wherein the guide faces (42, 41) extend so as to be tangential in relation to the piston longitudinal axis (L).

4. Tensioning device according to Claim 3, **characterized in that** the lock bar (30) is configured from two mutually parallel longitudinal portions (35A, 35B) so as to form as a slide, the guide faces (42) and lock bar faces (33) being in each case configured on said longitudinal portions (35A, 35B).

5. Tensioning device according to Claim 4, **characterized in that** a release portion (44), preferably designed as a segment of a circle, and a lock bar portion on which the lock bar face (33) is located are disposed in succession on each longitudinal portion (35A, 35B).

6. Tensioning device according to one of Claims 4 or 5, **characterized in that** the two longitudinal portions (35A, 35B) at least at one end thereof are connected to one another by a transverse web (36).

7. Tensioning device according to one of the preceding claims, **characterized by** a spring element (48) which is supported in relation to the support tube (11), on the one hand, and in relation to the lock bar (30), on the other hand, and which impinges the lock bar (30) in the direction of locking.

8. Tensioning device according to one of the preceding claims, **characterized by** a plurality of bolts (50) which as connecting elements are disposed on different circumferential portions.

## Revendications

1. Dispositif de serrage destiné à étirer un assemblage vissé, composé d'un goujon fileté (3) et d'un écrou fileté (4) en butée contre un support fixe (2), par traction au niveau de la portion d'extrémité filetée du goujon fileté (3), comprenant un boîtier cylindrique (10) muni d'un piston (15), qui peut se déplacer dans la direction longitudinale du goujon fileté et, conjointement avec une paroi interne du boîtier cylindrique (10), délimite un espace de travail hydraulique (18), et comprenant aussi une douille interchangeable (14) configurée pour pouvoir être entraînée par le piston (15) dans la direction longitudinale du piston (L), laquelle est pourvue d'un filetage (16) servant à l'assemblage vissé avec le goujon fileté (3), et comprenant un tube support (11) disposé dans la prolongation par rapport au boîtier cylindrique (10), lequel entoure l'écrou fileté (4) et est configuré pour être en butée contre le support (2), le tube support (11) étant pourvu d'un verrou (30), lequel est pourvu d'une surface de verrou (33) faisant face au piston (15) afin de venir en appui contre une surface de blocage (8) de l'écrou fileté (4) à l'opposé du piston (15), **caractérisé en ce que** le tube support (11) est un élément structural autonome par rapport au boîtier cylindrique (10) et séparable de celui-ci, et **en ce que** le tube support (11) et le boîtier cylindrique (10) peuvent être reliés par au moins un élément de liaison (50) dans la direction longitudinale du piston (L).

2. Dispositif de serrage selon la revendication 1, **caractérisé en ce que** le verrou (30) est guidé contre le tube support (11) transversalement par rapport à la direction longitudinale du piston (L).

3. Dispositif de serrage selon la revendication 1 ou 2, **caractérisé en ce que** des surfaces de guidage (42, 41) sont formées sur le verrou (30) et sur le tube support (11) pour le guidage du verrou (30), les surfaces de guidage (42, 41) s'étendant tangentiellement en référence à la direction longitudinale du piston (L).

4. Dispositif de serrage selon la revendication 3, **caractérisé en ce que** le verrou (30) est réalisé sous la forme d'un curseur composé de deux portions longitudinales (35A, 35B) parallèles l'une à l'autre, au niveau desquelles sont respectivement formées les surfaces de guidage (42) et les surfaces de verrou (33).

5. Dispositif de serrage selon la revendication 4, **caractérisé en ce que** sur chaque portion longitudinale (35A, 35B) sont disposées, l'une derrière l'autre, une portion de libération (44) de préférence configurée sous la forme d'un segment de cercle et une portion de verrou, au niveau de laquelle se trouve la surface de verrou (33).

6. Dispositif de serrage selon l'une des revendications 4 et 5, **caractérisé en ce que** les deux portions longitudinales (35A, 35B) sont reliées par une traverse (36) au moins au niveau d'une de leurs extrémités.

7. Dispositif de serrage selon l'une des revendications précédentes, **caractérisé par** un élément ressort (48), qui est supporté d'un côté par rapport au tube support (11) et de l'autre côté par rapport au verrou (30), lequel sollicite le verrou (30) dans la direction du verrouillage.

8. Dispositif de serrage selon l'une des revendications précédentes, **caractérisé par** plusieurs goujons (50) disposés sur des portions périphériques différentes et faisant office d'éléments de liaison.
